# EUROPÄISCHE PATENTSCHRIFT

(11) **EP 0 930 013 B1**
(45) Veröffentlichungstag und Bekanntmachung des Hinweises auf die Patenterteilung: **03.03.2004**
(21) Anmeldenummer: 98123674.8
(22) Anmeldetag: 11.12.1998
(51) Int. Cl.: A21D 6/00, A21D 13/00

(54) **Verfahren zur Herstellung und Lagerung von teilgebackenen Backwaren**
Process for preparation and storage of partially baked products
Procédé pour la préparation et le stockage de produits de boulangerie partiellement cuits

(30) Priorität: 16.01.1998 DE 19801369; 22.01.1998 DE 19802299
(43) Veröffentlichungstag der Anmeldung: 21.07.1999
(73) Patentinhaber: Koma Investments and Finance b.v., 6045 JE Roermond (NL)
(72) Erfinder: Aarts, Josef Maria Mathias, 6045 JE Roermond (NL)
(74) Vertreter: Graf, Helmut, Dipl.-Ing.

(56) Entgegenhaltungen:
- US-A- 4 746 526
- US-A- 5 281 433
- US-A- 5 447 739
- KIM J.C., THELOOSEN W.: "Het diepvriezen van krokante broodsoorten" VOEDINGSMIDDELENTECHNOLOGIE, Nr. 14, 7. April 1976, Seiten 8-9, XP002099356

## Beschreibung

Die Erfindung bezieht sich auf eine Verfahren gemäß Oberbegriff Patentanspruch 1 oder 3.

Bekannt ist ein Verfahren zur Lagerung von Teiglingen für die Herstellung von Gebäck (DE 42 00 111). Dieses bekannte Verfahren ist aber ausschließlich abgestellt auf Teigrohlinge, d.h. auf Produkte, die erst im Verwendungsfall, d.h. nach der Entnahme aus einer Tiefkühleinrichtung gebacken werden. Aufgabe der Erfindung ist es, ein Verfahren zum Herstellen und zur Lagerung von teilgebackenen Backwaren aufzuzeigen. Halb gebackenen oder besser teilgebackenen Backwaren im Sinne der Erfindung sind Backwaren, die nicht vollständig fertig gebacken sind sondern beispielsweise nur bis zu 30 bis 80% oder bevorzugt nur bis zu 60 bis 80% fertig gebacken wurden.

Bekannt ist aus der US-A-4 746 526 weiterhin ein Verfahren zur Herstellung und Lagerung einer vorgebackenen, tiefgefrorenen Backware, bei dem (Verfahren) die Backware nach dem Vorbacken unter Zugabe von Feuchtigkeit getempert wird, so daß ein Oberseitenkruste der frisch gebackenen Backware dann einen erhöhten Wassergehalt von wenigstens 16% aufweist. Anschließend erfolgt ein Einfrieren der frisch gebackenen Backware.

Zur Lösung dieser Aufgabe ist ein Verfahren entsprechend dem Patentanspruch 1 oder 3 ausgebi ldet.

Bei der Erfindung sind die gelagerten Produkte teilgebackene Backwaren, d.h. Backwaren, die wenigstens bis zu etwa 30 bis 50% bereits fertiggebacken sind. Die Erfindung ermöglicht es, sehr schnell und kurzfristig durch Abrufen oder Entnehmen der teilgebackenen Produkte aus einer Kühleinrichtung Backwaren zur Verfügung zu stellen, die frisch gebackenen Backwaren in ihrer Qualität, d.h. insbesondere in ihrem äußeren Erscheinungsbild und auch geschmacklich in keiner Weise nachstehen.

Die nach dem erfindungsgemäßen Verfahren hergestellten teilgebackenen und auch für die weitere Lagerung tiefgefrorenen Backwaren werden im Verwendungsfall ohne Auftauen bei einer vorgegebenen Temperatur fertiggebacken.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: eine nach dem erfindungsgemäßen Verfahren hergestellte Backware;
- Fig. 2: in vereinfachter Darstellung und in Draufsicht eine Anlage zum Durchführen des erfindungsgemäßen Verfahrens.

In den Figuren ist 1 eine teilgebackene Ware, beispielsweise eine bis zu 60% ausgebackene Backware, z.B. eine Semmel, die unmittelbar nach dem Backen, d.h. noch im heißem Zustand einer Dampf- oder Wasserbehandlung unterzogen wurde, und zwar derart, daß sich eine äußere Schicht 2 aus dem weitestgehend zu einer Kruste fertiggebackenen Teig und Wasser ergibt, die (Schicht) im Vergleich zu dem inneren Kern 3 allerdings sehr dünn ist. Im Anschluß an diese Dampf- oder Wasserbehandlung wurde die Backware 1 tiefgeforen, und zwar beispielsweise zunächst durch Schockfrieren unter Verwendung der üblichen Techniken, beispielsweise konventioneller Kältetechnik oder mit flüssigem CO2 und/oder Stickstoff, so daß im wesentlichen zunächst durch das Schockfrieren die äußere eingefrorene Schicht 2 bestehend aus der beim Vorbacken hergestellten Kruste erzeugt wird, die durch die Dampf- und Wasserbehandlung einen hohnen Wasseranteil aufweist. Nach dem Schockfrieren wird die Backware 1 unter Verwendung einer üblichen Kältetechnik auch im Bereich des Kernes 3 tiefgefroren und im tiefgefrorenem Zustand, beispielsweise bei einer Temperatur unter -18°C gelagert.

Im Verwendungsfall wird die Backware 1 ohne Auftauen in einem geeigneten Ofen erhitzt und fertiggebacken.

Bei diesem Fertigbacken wird durch den hohen Wasseranteil in der tiefgefrorenen Schicht 2 ein Austrocknen und Absplittern der diese Schicht bildenden Kruste vermieden. Beim Fertigbacken wird vielmehr aus der Schicht 2 eine feinsplittrige, geschmacklich hochwertige Kruste für das fertiggebackene Produkt erzeugt.

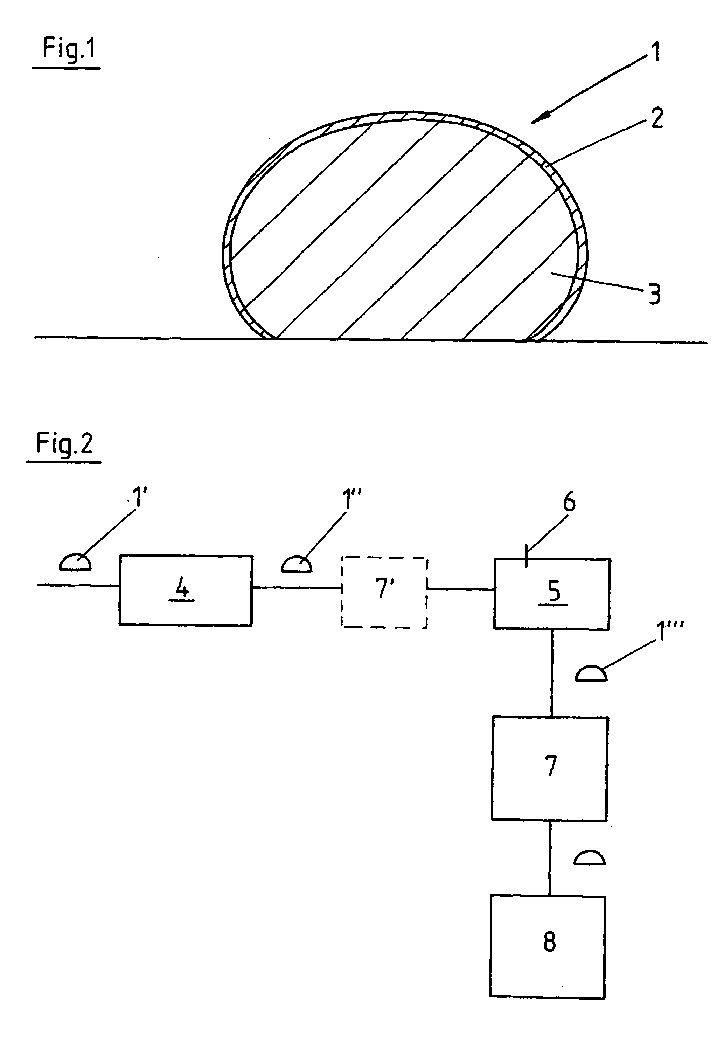

In der Figur 2 ist eine Anlage sehr schematisch wiedergegeben, die zum Herstellen der teilgebackenen und tiefgefrorenen Backware 1 geeignet ist. Die Anlage besteht bei der dargestellten Ausführungsform aus einem Ofen 4, welchem Teiglinge 1' zum Halbbacken zugeführt werden. Der Ofen 4 ist beispielsweise ein Durchlauf- oder Tunnelofen oder einer Ofenanordnung. Die teilgebackenen Produkte 1" werden dann im noch heißem Zustand einer Einrichtung 5 zugeführt, in der die Behandlung mit Wasserdampf und/oder Wasser erfolgt. Die Einrichtung 5 ist beispielsweise eine Kammer, die mit Wasserdampf beaufschlagt wird und/oder eine Kammer oder Station, in der ein Besprühen der teilgebackenen Backware 1" mit Wasser, vorzugsweise in fein verteilter Form, z.B. in Form eines Wasser-Sprays oder Aeorosols erfolgt. Verwendet werden für das Aufbringen des Wassers beispielsweise fein versprühende Wasserdüsen, beispielsweise Düsen 6, die unter Anwendung von Ultraschall auch ein Zerschlagen des an einer Düsenöffnung austretenden Wassers bzw. der dort austretenden Wassertröpfchen bewirken.

Nach der Wasserbehandlung wird das Produkt 1 "' einer Station 7 zum Schockfrosten insbesondere der äußeren, beim Halb-Backen erzeugten und mit Wasser angereicherten Kruste, d.h. zur Bildung der Schicht 2 zugeführt. Durch dieses Schockfrosten wird ein Durchweichen des Produktes auch im Bereich des Kernes 3 vermieden. Nach dem Schockfrosten erfolgt in der Kühleinrichtung 8 das vollständige Einfrieren und das weitere Lagern des Produktes 1.

Mit 7' ist in der Figur 2 noch eine Schockfrierstation angegeben, in der ein Schockfrieren des den Ofen 4 verlassenden Produktes 1" vor der Wasser- oder Wasserdampfbehandlung in der Station 5 erfolgt, und zwar derart, daß sich in der Station 7' eine dünne, tiefgefrorene Schicht auf dem Produkt 1 " bildet, d.h. eine Schicht, die in etwa der im Ofen 4 erzeugten Kruste entspricht.

Die Dicke der Schicht 2 sowie der Wasseranteil in dieser Schicht kann bei dem in der Figur 2 beschriebenen Verfahren durch unterschiedlichste Parameter gesteuert und optimiert werden. Diese Parameter sind insbesondere:
- Verweildauer des Produktes 1" bzw. 1''' in den Stationen 5, 7 und 7';
- Menge des je Zeiteinheit auf das Produkt 1" in der Station 5 aufgebrachten Wassers;
- Temperatur, mit der das Produkt 1" den Ofen 4 verläßt bzw. den Stationen 5 bzw. 7' zugeführt wird.

Wie vorstehend ausgeführt wurde, besteht bei der Erfindung somit die Möglichkeit, das halbgebackene Produkt 1 " in der Kammer 7' zumindest an der Oberfläche oder aber auch durchgehend einzugefrieren und dann die Wasserbehandlung vorzunehmen, mit dem Vorteil, daß das auf der Oberfläche des gefrorenen Produktes abscheidende oder kondensierende Wasser sofort zu Eis wird und das Produkt vor dem Austrocknen geschützt wird. Auch bei diesem Produkt wird beim Fertigbacken die Kruste feinsplittrig und verliert an Härte, was auf dem zusätzlichen Wasseranteil zurückzuführen ist, der in der Kruste beim Fertigbacken zur Verfügung steht. Es hat sich bewährt, das jeweilige, halb fertig gebackene Produkt bis zu etwa 80% zu backen und damit bis zu einem Zustand, in dem die gewünschten Krustenfarbe und somit auch die optimale Dextrinbildung in der Kruste vor der Behandlung mit dem Wasser bereits gegeben sind. Das Backen erfolgt mit einer höheren Backtemperatur.

Das Fertigbacken des Produktes im Verwendungsfall geschieht dann bei einer Backtemperatur von ca. 180°C. Die Fertigbackzeit beträgt etwa 125% derjenigen Zeit, die sich aus der Differenz zwischen der üblichen Gesamt-Backzeit, die zum vollständigen Backen des Produktes erforderlich wäre, und der Zeit des ersten Backvorganges zum Herstellen des halb oder teilgebackenen Produktes ergibt.

Wenn diese Backzeitdifferenz beispielsweise mit vier Minuten errechnet wird, ist die tatsächliche Fertigbackzeit etwa 5 Minuten.

Wie oben ausgeführt wurde, besteht eine weitere Möglichkeit des erfindungsgemäßen Verfahrens darin, daß das noch heiße, teilgebackene Produkt 1" mit dem Wasser behandelt, d.h. mit Wasserdampf bedampft und/oder mit Wasser besprüht wird. Versuche haben gezeigt, daß diese Ausführungen des erfindungsgemäßen Verfahrens zu den besseren Ergebnissen führt, da das noch ofenheiße Produkt 1" in diesem Zustand sehr viel Wasser oder Feuchtigkeit aufnimmt, das bzw. die mit Sicherheit auch bis in die Krume gelangt. Die Behandlung mit Dampf erfolgt wenigstens einmal mit einer Dauer von 30 Sekunden und mit einer anschließenden Verweilzeit, bevor das Schockfrieren und Tieffrieren erfolgt. Die Verweilzeit beträgt beispielsweise 15 Sekunden. Die Behandlung mit Wasser oder Wasserdampf kann auch mehrfach erfolgen. Die erhöhte Wasser- oder Feuchtigkeitsaufnahme bei einer Behandlung des noch ofenheißen Produktes 1" mit Wasser oder Wasserdampf ist nach der der Erfindung zugrundeliegenden Erkenntnis darauf zurückzuführen, daß während des Backens dieses Produktes im Ofen 4 ständig Wasserdampf aus dem Produkt entweicht, was nach dem Entnehmen dieses Produktes aus dem Ofen und bei dem hierbei auftretenden Abkühlen zu einem Unterdruck im Inneren des Produktes 1" führt, so daß durch diesen Unterdruck das aufgebrachte Wasser bzw. die aufgebrachte Feuchtigkeit in das Innere des Produktes und dabei insbesondere in die Kruste 2 im verstärktem Maße eindringen kann. Weiterhin werden auch die beim Vorbacken insbesondere in der Kruste 2 erzeugten Aromastoffe mit dem Wasser in das Produkt bzw. in die Krume mitgeführt. Hierdurch wird der Geschmack des fertiggebackenen Produktes bzw. der Krume dieses Produktes wesentlich verbessert.

Dies bedeutet auch, daß es bei dem erfindungsgemäßen Verfahren zweckmäßig ist, daß Produkt 1" im Ofen 4 zumindest soweit vorzubacken, daß bereits bei diesem Vorbacken Aromastoffe in der Kruste entstehen.

Bei diesem Verfahren ist es dann zweckmäßig, nach einem ersten, auf die Behandlung mit Dampf oder Wasser folgenden Schockgefrieren des teilgebackenen Produktes nochmals eine Wasser- oder Dampfbehandlung vorzunehmen, um so eine zusätzliche äußere Eisschicht auf dem Produkt zu bilden, die ein Austrocknen bei der Lagerung im tiefgefrorenen Zustand verhindert.

Versuche mit dem erfindungsgemäßen Verfahren haben auch bestätigt, daß die fertiggebackenen Produkte, beispielsweise Brötchen, die nach dem erfindungsgemäßen Verfahren als teilgebackene Ware hergestellt und tiefgefroren gelagert und anschließend fertiggebacken wurden, einen gegenüber Brötchen, die im herkömmlichen Backverfahren hergestellte wurden, besser schmecken und auch die Kruste der nach dem erfindungsgemäßen Verfahren hergestellten Produkte ihre Frische länge behält.

Das erfindungsgemäße Verfahren ist für dem Fachbetrieb und auch für den Endverbraucher im gleichen Maße vorteilhaft. Der Fachbetrieb kann durch das Anwenden des erfindungsgemäßen Verfahrens Backflächenengpässe, die insbesondere in den Morgenstunden auftreten können, optimal überbrücken, weil sich durch die beim Halbbacken benötigte Backzeit von beispielsweise von nur 80% der üblichen Backzeit die Leistung der vorhandenen Öfen um ca. 400% erhöhen läßt.

Vorstehend wurde davon ausgegangen, daß die Behandlung der teilgebackenen Backware bzw. des teilgebackenen Produktes mit Wasser oder Wasserdampf erfolgt. Bei einer bevorzugten Ausführungsform erfolgt gleichzeitig auch ein Aufbringen oder Injizieren von kälteresistenten Zusatzstoffen in Form von rezepturmäßigen Bestandteilen, die selbstverständlich den gesetzlichen Bestimmungen über Zusatzstoffe bei Lebensmitteln, d.h. z.B. der europäischen Zusatzstoffverordnung entsprechen. Als solche kälteresistenten Zusatzstoffe eigenen sich beispielsweise Öle, insbesondere auch geschmacksneutrale Öle, wie beispielsweise Erdnußöl. Das Aufbringen oder Injizieren dieser Zusatzstoffe erfolgt dann beispielsweise durch Bedampfen, Vernebeln oder auch durch Kontaktieren. Bevorzugt werden die Zusatzstoffe bei der Wasserbehandlung aufgebracht, und zwar beispielsweise dadurch, daß dem bei der Wasserbehandlung verwendeten Wasser diese Zusatzstoffe zugegeben sind und/oder die Zusatzstoffe bei der Wasserbehandlung und/oder Dampfbehandlung separat zugegeben, beispielsweise in dem Raum der Station 5 eingebracht, und zwar zeitgleich mit der Wasser- oder Dampfbehandlung oder aber gegenüber dieser zeitlich verschoben.

Das Injizieren von kälteresistenten Zusatzstoffen, beispielsweise von Öl hat den Vorteil, daß sich diese auf der Außenfläche des Produktes niederschlagen und somit einen Film bilden, der ein Austrocknen des teilgebackenen Produktes beim Schockfrieren und während der Lagerung im tiefgefrorenen Zustand verändert.

## Patentansprüche

1. Verfahren zur Herstellung und Lagerung von teilgebackenen Backwaren,
bei dem die jeweilige Backware in einem Ofen oder einer Ofenanordnung (4) teilgebacken wird;
bei dem die Backware unmittelbar nach diesem Teilbacken an ihrer Oberfläche mit Wasserdampf und/oder Wasser behandelt wird, so daß sich an der Außenfläche der Backware (1''') eine Schicht (2) mit erhöhtem Wasseranteil bildet, die in etwa gleich der Dicke der beim Teilbacken erzeugten Kruste ist, und
bei dem anschließend ein Tieffrieren der mit Wasser und/oder Wasserdampf behandelten Backware (1''') erfolgt, **dadurch gekennzeichnet,**
**daß** das Teilbacken mit einer Backzeit erfolgt, die etwa 30 bis 80 der üblichen Gesamtbackzeit der Backware beträgt,
**daß** für das Tieffrieren in einem ersten Schritt zunächst ein Schockfrosten der Backware zur Bildung einer tiefgefrorenen dünnen Schicht auf der Backware, und
**daß** anschließend in einem zweiten Schritt ein durchgehendes Einfrieren der Backware erfolgt.

2. Verfahren nach Anspruch 1, **dadurch gekennzeichnet, daß** die Behandlung mit Wasser und/oder Wasserdampf an der noch warmen, teilgebackenen Ware (1") erfolgt.

3. Verfahren zur Herstellung und Lagerung von teilgebackenen Backwaren,
bei dem die jeweilige Backware in einem Ofen oder einer Ofenanordnung (4) teilgebacken wird;
bei dem die Backware dem Teilbacken an ihrer Oberfläche mit Wasserdampf und/oder Wasser behandelt wird, und
bei dem anschließend ein Tieffrieren der mit Wasser und/oder Wasserdampf behandelten Backware (1''') erfolgt, **dadurch gekennzeichnet,**
**daß** das Teilbacken mit einer Backzeit erfolgt, die etwa 30 bis 80 der üblichen Gesamtbackzeit der Backware beträgt, und
**daß** vor der Behandlung mit Wasser oder Wasserdampf ein Schockfrosten des teilgebackenen Produktes (1") zur Bildung einer tiefgefrorenen dünnen Schicht auf der Backware, erfolgt.

4. Verfahren nach einem der vorhergehenden Ansprüche, **dadurch gekennzeichnet,**
**daß** die Backzeit beim Teilbacken etwa 60 bis 80% der üblichen Gesamtbackzeit der Backware beträgt.

5. Verfahren nach einem der vorhergehenden Ansprüche, **dadurch gekennzeichnet,**
**daß** die Backzeit bei dem Teilbacken so gewählt ist, daß sich auf dem teilgebackenen Produkt eine Kruste mit deutlicher Krustenfarbe und eine Dextrinbildung in der Kruste ergeben.

6. Verfahren nach einem der vorhergehenden Ansprüche, **dadurch gekennzeichnet,**
**daß** vor dem endgültigen Lagern der tiefgefrorenen Backware eine weitere Behandlung mit Wasser oder Wasserdampf erfolgt.

7. Verfahren nach einem der vorhergehenden Ansprüche, **gekennzeichnet durch** das Aufbringen eines kälteresistenten Zusatzstoffes auf die Backware vor dem endgültigen Tieffrieren und/oder Lagern.

8. Verfahren nach Anspruch 7, **dadurch gekennzeichnet, daß** der kälteresistente Zusatzstoff ein der Rezeptur der Backware entsprechender rezepturmäßiger Stoff ist.

9. Verfahren nach Anspruch 7 oder 8, **dadurch gekennzeichnet, daß** der Zusatzstoff ein Öl ist.

10. Verfahren nach einem der Ansprüche 7 - 9, **dadurch gekennzeichnet, daß** das Aufbringen des Zusatzstoffes durch Bedampfen, Vernebeln oder Kontaktieren erfolgt.

11. Verfahren nach einem der Ansprüche 7 - 10, **dadurch gekennzeichnet, daß** das Aufbringen des Zusatzstoffes zeitgleich mit oder zeitlich versetzt gegenüber der Behandlung mit Wasser und Wasserdampf erfolgt.

## Claims

1. Process for making and storing partially baked baker's wares, according to which the corresponding baker's ware is partially baked within an oven or an oven arrangement (4),
the baker's ware immediately after said partial baking step is treated by water vapor and/or water on its surface in such a manner that on the outer surface of the baker's ware (1''') a layer (2) with increased water proportion is formed, the thickness of which is substantially equal to that of the crust resulting from the partial baking step, and
subsequent thereto a deep freezing step of the baker's ware (1"') treated with water and/or water vapor follows, **characterized in that**
the baking time of the partial baking step is approximately 30 until 80 percent of the usual total baking time of the baker's ware,
that for deep freezing within a first step initially a shock-frosting step of the baker's ware for forming a deep frozen thin layer on the baker's ware is performed, and
that subsequent thereto within a second step a throughgoing deep freezing step of the baker's ware is performed.

2. Process according to claim 1, **characterized in that** the treatment with water and/or water vapor is performed on the partially baked product (1") in its still warm condition.

3. Process for making and storing partially baked baker's wares, with which the corresponding baker's ware is partially baked within an oven or an oven system (4), with which the baker's ware before the partial baking step is treated on its surface by means of water vapor and/or water, and
with which subsequent thereto a deep freezing step of the baker's ware (1''') treated by water and/or water vapor is performed, **characterized in that**
the partial baking step is performed at a baking time, which is about 30 until 80 percent of the usual baking time of the baker's ware and
that before the treatment by water and water vapor a shock frosting step of the partially baked product (1") for forming a deep frozen, thin layer on the baker's ware is performed.

4. Process according to any one of the preceding claims, **characterized in that** the baking time during the partial baking step is approx. 60 - 80 percent of the usual total baking time of the baker's ware.

5. Method according to any one of the preceding claims, **characterized in that** the baking time during the partial baking step is chosen so that on the partially baked product a crust with clear crust color and dextrin formation within the crust is obtained.

6. Method according to anyone of the preceding claims, **characterized in that** before finally storing the deep frozen baker's ware a further treatment step with water or water vapor is performed.

7. Process according to any one of the preceding claims, **characterized by** applying a low temperature resistant additive onto the baker's ware before the final deep frozing step and/or storing step.

8. Process according to claim 7, **characterized in that** the low temperature resistant additive is a recipe dependent material corresponding to the recipy of the baker's ware.

9. Process according to claim 7 or 8, characterized that the additive is oil.

10. Process according to any one of claims 7 - 9, **characterized in that** applying the additive is performed by treatment with a vaporizing, atomizing or contacting step.

11. Process according to any one of claims 7 - 10, **characterized in that** applying the additive is performed at the same time as or time-shifted in view of the treatment with water and water vapor.

## Revendications

1. Procédé de fabrication et d'entreposage de biscuits partiellement cuits,
dans lequel le biscuit respectif est partiellement cuit dans un four ou un aménagement de four (4);
dans lequel le biscuit est, directement après sa cuisson partielle, traité en surface à la vapeur d'eau et/ou à l'eau, de sorte qu'il se forme sur la surface externe du biscuit (1''') une couche (2) ayant une teneur en eau plus élevée, qui est plus ou moins égale à l'épaisseur de la croûte formée lors de la cuisson partielle, et
dans lequel on effectue ensuite une surgélation du biscuit (1''') traité à l'eau et/ou à la vapeur d'eau,
**caractérisé en ce que**
la cuisson partielle se fait avec une durée de cuisson qui est d'environ 30 à 80% de la durée de cuisson totale habituelle du biscuit,
pour la surgélation, on effectue, dans une première étape, tout d'abord une congélation rapide du biscuit pour former une couche surgelée mince sur le biscuit, et
ensuite, au cours d'une seconde étape, on effectue une congélation continue du biscuit.

2. Procédé selon la revendication 1,
**caractérisé en ce que** le traitement à l'eau et/ou à la vapeur d'eau se fait sur le biscuit partiellement cuit (1'') encore chaud.

3. Procédé de fabrication et d'entreposage de biscuits partiellement cuits,
dans lequel le biscuit respectif est partiellement cuit dans un four ou un aménagement de four (4);
dans lequel le biscuit est, après sa cuisson partielle, traité en surface à la vapeur d'eau et/ou à l'eau, et
dans lequel on effectue ensuite une surgélation du biscuit (1''') traité à l'eau et/ou à la vapeur d'eau,
**caractérisé en ce que**
la cuisson partielle se fait avec une durée de cuisson qui est d'environ 30 à 80% de la durée de cuisson totale habituelle du biscuit, et
avant le traitement à l'eau et/ou à la vapeur d'eau, on effectue une congélation rapide du produit partiellement cuit (1'') pour former une couche surgelée mince sur le biscuit.

4. Procédé selon l'une quelconque des revendications précédentes, **caractérisé en ce que** la durée de cuisson lors de la cuisson partielle est d'environ 60 à 80% de la durée de cuisson totale usuelle du biscuit.

5. Procédé selon l'une quelconque des revendications précédentes, **caractérisé en ce que** la durée de cuisson lors de la cuisson partielle est choisie de sorte qu'il se forme sur le produit partiellement cuit une croûte ayant la couleur nette d'une croûte et de la dextrine.

6. Procédé selon l'une quelconque des revendications précédentes, **caractérisé en ce que**, avant l'entreposage final du biscuit surgelé, on effectue un autre traitement à l'eau ou à la vapeur d'eau.

7. Procédé selon l'une quelconque des revendications précédentes, **caractérisé par** l'application d'un additif résistant au froid sur le biscuit avant la surgélation finale et/ou l'entreposage.

8. Procédé selon la revendication 7,
**caractérisé en ce que** l'additif résistant au froid est une substance dont la composition correspond à celle du biscuit.

9. Procédé selon la revendication 7 ou 8,
**caractérisé en ce que** l'additif est une huile.

10. Procédé selon l'une quelconque des revendications 7 à 9, **caractérisé en ce que** l'application de l'additif se fait par vaporisation, atomisation ou mise en contact.

11. Procédé selon l'une quelconque des revendications 7 à 10, **caractérisé en ce que** l'application de l'additif se fait simultanément ou avec un certain décalage par rapport au traitement à l'eau et à la vapeur d'eau.
